# EUROPEAN PATENT SPECIFICATION

(11) **EP 4 227 131 B1**
(45) Date of publication and mention of the grant of the patent: **08.07.2026**
(21) Application number: 22156199.6
(22) Date of filing: 10.02.2022
(51) Int. Cl.: B60K 1/04, B62D 21/15

(54) **MOUNTING ADAPTER**
MONTAGEADAPTER
ADAPTATEUR DE MONTAGE

(43) Date of publication of application: 16.08.2023
(73) Proprietor: Ford Global Technologies, LLC, Dearborn, MI 48126-2701 (US)
(72) Inventor: BAYRAKTAR, Baris, 41950 Gölcük/Kocaeli (TR); UZUN, Tevfik Can, 34844 Maltepe/Istanbul (TR); DALLI, Onur, 34315 Avcilar/Istanbul (TR); GÜL, Seyhun, 41050 Izmit/Kocaeli (TR); COREKCIOGLU, Falk Rifat, 34887 Sancaktepe/Istanbul (TR); EKINCI, Erol, 41900 Derince/Kocaeli (TR)
(74) Representative: Markowitz, Markus

(56) References cited:
- DE-A1- 102018 206 118
- US-A1- 2014 117 716
- US-B2- 10 632 857

## Description

The present invention relates to a mounting adapter for mounting a battery module to a vehicle underbody.

Electric vehicles or hybrid vehicles require a storage device for considerable amounts of electric energy, which is usually a battery pack or battery module comprising a plurality of batteries, e.g., lithium-ion batteries. Apart from the batteries, the battery module may comprise a casing in which the batteries are disposed as well as mounting features like brackets or the like, for mounting the module to the vehicle. For various reasons, the battery module is normally mounted inside or underneath the vehicle underbody. For this purpose, the dimensions of the battery module must be compatible with the available space in or under the vehicle underbody. This can be particularly challenging if the underbody was not originally designed for receiving a battery module. For instance, the space between longitudinal beams on a platform originally designed for a combustion engine may be too narrow for a given battery module. Even if it is possible to integrate the module, the space may be so limited that any deformation of the underbody in case of a side impact immediately leads to a damage of the battery module. In other words, the module is not protected by a significant crush zone. Furthermore, a platform designed for a combustion engine does not have any mounting features compatible with those of the battery module, and oftentimes does not allow for providing such features.

JP 2015-97170 A discloses a battery support element comprising a support part for supporting a battery from below. The support part comprises resin material into which reinforcement elements are insert molded. At least some of the reinforcing elements may be extruded aluminum alloy parts.

WO 2011/061571 A1 discloses a battery tray for a vehicle, comprising a frame, a floor and a roof. The frame, the floor and the roof define a housing adapted to receive batteries, and the frame comprises a profile having a substantially constant cross-section. At least some components of the frame may be made by aluminum extrusion.

DE 10 2018 109 509 A1 discloses a device for accommodating a plurality of accumulators for operating a motor vehicle having an electric drive. The device comprises a stainless-steel trough which has a trough base and a peripheral trough edge, wherein an outer frame surrounding the trough edge is provided. The outer frame may be made of aluminum or an aluminum alloy and may comprise a hollow profile.

JP 2013-089448 A discloses an on-vehicle structure of a battery module, for mounting the battery module to the vehicle. The structure includes a lower frame body to fix the battery module, and the lower frame body has a front frame located on the front side of the vehicle in the horizontal direction thereof, a rear frame located on the rear side, and a pair of right and left side frames connecting both end parts of the front frame and the rear frame. The front frame has a hollow cross-sectional shape while having a fastening flange to be fixed to the vehicle, and the side frame has a fastening flange to be fixed to the vehicle.

US 2017/0240207A1 discloses a protective frame structure, including a lower frame, an intermediate frame that is interlinked with the lower frame and is situated above the lower frame and an upper frame that is interlinked with the intermediate frame and is situated above the intermediate frame. A mounting space in which a battery module is configured to be mounted is formed between the lower frame and the intermediate frame, an upper space is formed between the intermediate frame and the upper frame, and the intermediate frame is deformed upward when an external load has been applied to the protective frame structure.

In light of the above-mentioned prior art, integration of a battery module into various vehicle platforms still offers room for improvement.

The problem to be solved by the present invention is to allow for an easy integration of a battery module into various vehicle platforms.

According to the invention, the problem is solved by a mounting adapter having the features of claim 1, wherein dependent claims pertain to preferred embodiments of the invention.

It should be noted that features and measures that are mentioned individually in the following description may be combined in any technically reasonable way and point out further embodiments of the invention. The description further characterises and specifies the invention, in particular in context with the figures.

The present invention provides a mounting adapter for mounting a battery module to a vehicle underbody. The vehicle underbody is a part of a road vehicle, like a passenger car, a bus, a truck or the like, so one could also say that it is a road-vehicle underbody whereby of course also off-road-vehicles are included. The underbody is a lower part of the vehicle and is normally a chassis or a part of the chassis. The vehicle is normally an electric vehicle or at least a hybrid vehicle, i.e., it is adapted to be driven entirely or at least temporarily be an electric motor. Said electric motor can also be referred to as the drive motor in the following. The battery module comprises at least one battery, normally a plurality of batteries, which are used to store electric energy for powering the drive motor of the vehicle. Although the invention is not limited to any particular type of battery module, at least one battery may in particular be a lithium-ion, lithium polymer or solid-state battery. As a rule, the battery module may comprise a housing in which the at least one battery is disposed. Also, it usually comprises a plurality of mounting features that facilitate mounting the battery module directly or indirectly to a vehicle underbody. The term "mounting adapter" indicates that the invention is applicable to a situation where the battery module cannot be mounted directly to the vehicle underbody, mostly due to incompatible dimensions and/or locations of mounting features.

The mounting adapter comprises a frame adapted to be mounted to the vehicle underbody and being adapted for mounting the battery module to the frame in a mounting space on an underside of the frame, wherein at least one energy-absorbing element of the mounting adapter is disposed on either side of the mounting space with respect to a transverse Y-axis. The frame could be made of a single piece, but usually comprises several pieces, which are normally rigidly connected to each other. As a rule, it forms a mechanically stable, optionally self-supporting, structure. It is adapted to be mounted to the vehicle underbody, wherefore it may comprise mounting features that correspond to mounting features on the vehicle underbody, e.g., through-holes for connecting bolts, locator pins or the like. The frame may be designed to be mounted underneath the vehicle underbody, so that an upper side of the frame faces the vehicle underbody. Furthermore, the frame is adapted for mounting the battery module thereto, so that the battery module is disposed in a mounting space on an underside of the frame. The terms "upper side" and "underside" (or lower side) herein refer to the assembled state in which the mounting adapter is mounted to the vehicle underbody. The frame may comprise mounting features that correspond to mounting features on said battery module. The dimensions of the mounting space are sufficient so that the battery module can be disposed therein when it is mounted to the frame. The mounting space may at least partially be delimited or defined by the frame. Since the mounting space is disposed on an underside of the frame, the battery module can be positioned in the mounting space from below the frame and is also accessible from the underside.

Furthermore, at least one energy-absorbing element is disposed on either side of the mounting space with respect to a transverse Y-axis. Again, the Y-axis is defined with respect to the assembled state where the mounting adapter is mounted to the vehicle underbody. It will be understood that the at least one energy-absorbing element is a part of the mounting adapter. In particular, it may be a part of the frame or it may be connected to the frame. The at least one energy-absorbing element is disposed on opposite sides of the mounting space, wherefore normally at least one energy-absorbing element is disposed on one side (left side) and one is disposed on the other side (right side) of the mounting space. Whereas at least one function of the frame is to provide structural stability, the function of the energy-absorbing element is to absorb kinetic energy during a crash by deformation of the energy-absorbing element. Accordingly, since such an element is disposed on either side of the mounting space, the battery module is at least to some degree protected in a crash situation, e.g. with a side impact. For improved protection, the respective energy-absorbing element may be disposed along at least 70% or at least 80% of the length of the mounting space in the longitudinal direction.

The inventive mounting adapter combines several advantages. First, it allows for an integration of a battery module into a vehicle underbody that is not specifically designed for this battery module. It therefore eliminates the necessity to design a new vehicle underbody, so that it is conceivable to use an underbody that is identical or at least similar to that of a vehicle with a combustion engine, where no integration of a battery module is needed. Furthermore, during assembly as well as for maintenance and replacement of the battery module, it is highly beneficial that the battery module is mounted to the underside of the frame, where it is easily accessible, normally without removing the frame from the vehicle underbody. Additionally, the mounting adapter provides an integrated crash protection for the battery module by the at least one energy-absorbing element.

According to the invention, the frame comprises a plurality of cross members extending along the Y-axis and a plurality of longitudinal members extending along a longitudinal X-axis, wherein at least two longitudinal members are connected by a plurality of cross members. The cross members, which may at least in some embodiments also be referred to as "crossbeams" of the like, extend along the Y-axis and may at least partially be parallel to the Y-axis. The longitudinal members, which may in some embodiments be referred to as longitudinal beams, extend along the X-axis and may at least partially be parallel to the X-axis. In order to improve the structural stability of the frame, at least two longitudinal members are connected by a plurality of cross members. At the same time, each of the plurality of cross members is connected by the two longitudinal members. The connection between a longitudinal member and a cross member may be direct (e.g. by welding, riveting, screwing the like) or indirect wherein a bracket element or the like connects the longitudinal member to the cross member. However, the bracket element may also be regarded as a part of the longitudinal element or the cross element, respectively. During a side impact in which a force is directly or indirectly exerted on a longitudinal member, this force can be transferred through one or several cross members to another longitudinal member. This may help to reduce the local deformation of the frame, thereby protecting the battery module.

Preferably, at least one energy-absorbing element is made of a metal comprising aluminum. This may be pure aluminum or, more commonly, an aluminum alloy. The one hand, aluminum and most of its alloys allow for a good energy absorption, while on the other hand, they have a rather low specific mass that allows for a light-weight construction of the energy-absorbing element and of the mounting adapter as a whole.

For instance, an energy-absorbing element as mentioned above could comprise aluminum foam, which has beneficial energy-absorbing properties. Alternatively or additionally, at least one energy-absorbing element may comprise an extruded profile. This could be an open profile (e.g., a C-profile or T-profile), but may in particular be a closed profile, which comprises one or a plurality of chambers.

Apart from its energy-absorbing function, the respective element could also facilitate the connection between the battery module and the mounting adapter. For instance, it could comprise a locator feature (e.g., a locator hole) corresponding to a locator feature (e.g., a locator pin) of the battery module.

According to the invention, the frame comprises a plurality of vehicle-side longitudinal members which are adapted for attaching the frame to the vehicle underbody. One could also say that each vehicle-side longitudinal member is adapted to be attached to the vehicle underbody. Each of these vehicle-side longitudinal members may comprise mounting features corresponding to mounting features on the vehicle underbody, e.g., holes for bolts or rivets. In this embodiment, the vehicle-side longitudinal members represent the "vehicle side" of the mounting adapter. For instance, the relative positions of the vehicle-side longitudinal members could correspond to the relative positions of longitudinal beams of the vehicle underbody, so that each vehicle-side longitudinal member is connected to a longitudinal beam of said underbody.

Also, the frame may comprise a plurality of battery-side longitudinal members which are adapted for attaching the battery module to the frame. One could also say that the battery module is adapted to be attached to each battery-side longitudinal member. Each of these battery-side longitudinal members may comprise mounting features corresponding to mounting features on the battery module. In this embodiment, the battery-side longitudinal members represent the "battery side" of the mounting adapter.

One embodiment provides that at least one energy-absorbing element is disposed at an outer side of a battery-side longitudinal member with respect to the Y-axis. In other words, the energy-absorbing element is further away from the center vertical plane of the mounting adapter than the respective battery-side longitudinal member. Specifically, the energy-absorbing element can be connected to the battery-side longitudinal member. The battery-side longitudinal member can be disposed near the edge of the mounting space so that the energy-absorbing element can be positioned transversally or laterally next to the mounting space.

While the energy-absorbing elements are designed to absorb energy by deformation, the frame as such should have a higher stability. In order to achieve this goal, at least some of the longitudinal members and/or the cross members can be made of steel. In order to reduce the weight, the respective element normally has a profile, which could be an open profile or a closed (e.g., circular or rectangular) profile.

As mentioned above, the vehicle-side longitudinal members represent the vehicle side of the adapter, while the battery-side longitudinal members represent the battery side thereof. Accordingly, it is often advantageous that a transverse distance of the vehicle-side longitudinal members is different from a transverse distance of the battery-side longitudinal members. The transverse distance is the distance with respect to the Y-axis. One could also say that the vehicle-side longitudinal members are further apart than the battery-side longitudinal members, or vice versa. For example, in a situation where it is impossible to mount the battery module directly between two longitudinal beams of the vehicle underbody, the vehicle-side longitudinal members may be disposed at a distance corresponding to that of the longitudinal beams, while the battery-side longitudinal members may be disposed at a greater distance from each other, which may allow for the battery module to at least partially be disposed between the battery-side longitudinal members.

For example, if the transverse distances of the vehicle-side and battery-side longitudinal members are different as described above, it may be useful to use different types of cross members. According to one embodiment, the frame comprises a plurality of first cross members connecting the vehicle-side longitudinal members and a plurality of second cross members connecting at least one vehicle-side longitudinal member with at least one battery-side longitudinal member. In this case, the second cross members can be relatively short and account for the transverse distance between the first and battery-side longitudinal members.

Preferably, the mounting adapter comprises a plurality of jacking points adapted for supporting the vehicle on a vehicle lift. As will be understood, the jacking points are those points or locations that allow for supporting the vehicle. Normally, the vehicle has a total of four jacking points so that each jacking point supports more or less a quarter of the entire weight of the vehicle. In this embodiment, the mounting adapter is designed stable enough that a considerable portion of the weight of the vehicle can be transferred to the respective jacking points without risking deformation of the mounting adapter. This embodiment is beneficial since the mounting adapter, due to its dimensions, could otherwise suitable locations for a jacking point on the vehicle underbody.

Specifically, at least two jacking points can be disposed at an underside of the battery-side longitudinal members. This includes the possibility that the jacking point is directly for the battery-side longitudinal member as well as the possibility that the jacking point is disposed on an additional member (a jacking element) that is connected to the underside of the battery-side longitudinal member. It will be appreciated that in this embodiment, the weight force is transferred from the vehicle underbody through the vehicle-side longitudinal member, optionally through a second cross member, and through the battery-side longitudinal member.

One embodiment provides that at least one hollow sleeve element vertically traverses a longitudinal member, wherein in assembled state, a connecting element for connecting the frame to the vehicle underbody or the battery module is passed through the sleeve element. The sleeve element can e.g., be cylindrical or at least partially cylindrical. It vertically traverses a longitudinal member, i.e., it extends along (or even parallel to) a vertical Z-axis and extends through a through-opening in the longitudinal member. It can be permanently connected to the longitudinal member, e.g., by welding or press-fitting. The longitudinal member preferably comprises a closed profile. Passing the sleeve element through the longitudinal member provides a secure connection, in particular regarding horizontal forces. Furthermore, the sleeve element may be an elastic bushing for example a rubber-metal bushing, which is highly favorable under NVH (Noise, Vibration, Harshness) aspects, since it helps to dampen vibrations that could be transferred via the sleeve element. A connecting element, e.g., a bolt, is passed through the sleeve element, i.e., the sleeve element forms a sleeve around the connecting element. By way of example, the connecting element may be a bolt with the head of the bolt located at an underside of a vehicle-side longitudinal member. The shaft of the bolt passes through the sleeve element of the vehicle-side longitudinal member and further through an opening in a longitudinal beam of the vehicle underbody, where it can be secured by a nut, e.g., a weld nut. Also, the inside of the hollow sleeve element could be provided with an inner threading so that a bolt could be directly screwed into the sleeve element, which could, e.g., be a barrel nut.

As will be understood, operation of the battery module also requires additional electrical components, in particular electric wiring to provide a connection to the drive motor or other components. Also, safe and/or optimum operation of the battery module may require cooling, wherefore coolant pipes and/or heat exchange elements may be required. Accordingly, it is preferred that the mounting adapter comprises at least one attachment part that is connected to the frame and is adapted for attaching an electrical component or a cooling element to the frame. The respective attachment part can be directly or indirectly connected to at least one longitudinal member or at least one cross member. Such attachment parts may be made from sheet metal, e.g., steel or possibly aluminum alloy.

The invention further provides a combination of a vehicle, a mounting adapter and a battery module, the mounting adapter comprising a frame that is mounted to a vehicle underbody of the vehicle, the battery module being mounted to the frame in a mounting space on an underside of the frame, wherein the mounting adapter comprises at least one energy-absorbing element disposed on either side of the mounting space with respect to a transverse Y-axis.

All these terms have been explained with respect to the inventive mounting adapter. Advantageous embodiments of the inventive combination correspond to those of the inventive mounting adapter.

Further advantageous details and effects of the invention are explained further in the following with reference to an embodiment shown in the figures. Wherein
- Fig. 1: is a perspective view of an inventive mounting adapter;
- Fig. 2: is a top view of the mounting adapter of fig.1;
- Fig. 3: is a perspective view of a detail of the mounting adapter of fig. 1;
- Fig. 4: shows an underside view of a vehicle with the mounting adapter of fig. 1; and
- Fig. 5: is a sectional view of a detail of the vehicle, the mounting adapter, and a battery module.

In the various figures, like parts are always associated with the same reference numerals, wherefore they are usually depicted only once.

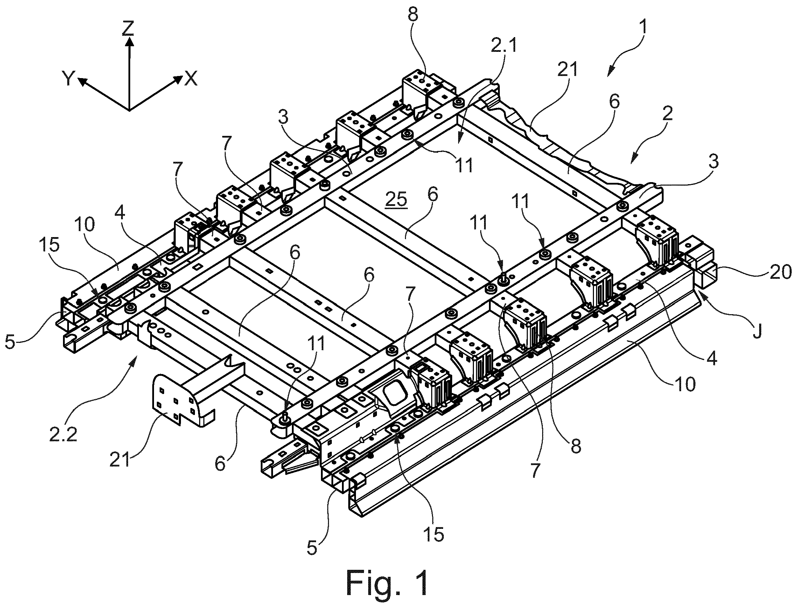

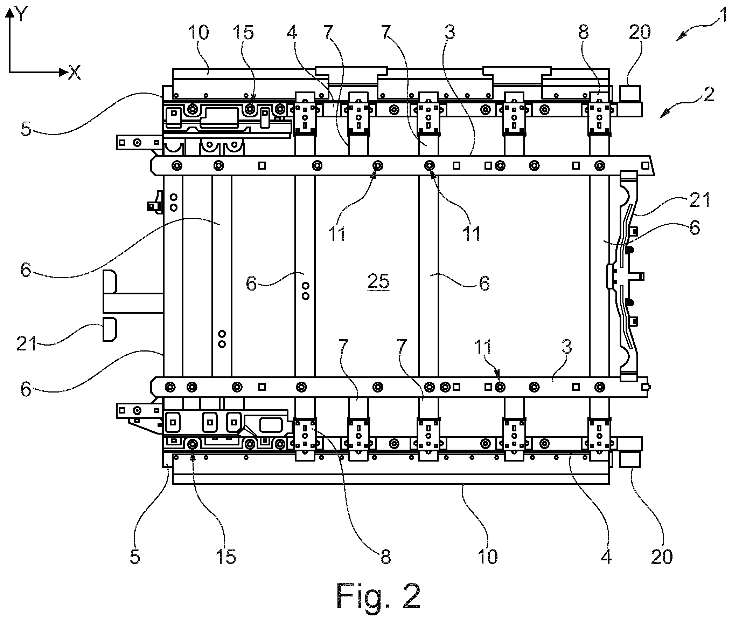

Figs. 1, 2 and 3 show an inventive mounting adapter 1 which may be used for mounting a battery module 40 to an underbody 31 of a vehicle 30, like a passenger car. The mounting adapter 1 comprises a frame 2 with a plurality of longitudinal members 3, 4, 5 that extend along a longitudinal X-axis and a plurality of cross members 6, 7 that extend along a transverse Y-axis. All of these members 3-7 are made exemplary of steel tubes with a closed profile. Two vehicle-side longitudinal members 3 are connected by a plurality of first cross members 6. A plurality of second cross members 7 extend transversely outwards from each of the vehicle-side longitudinal members 3 and are connected via bracket elements 8 to battery-side longitudinal members 4, 5. In this embodiment, an inner battery-side longitudinal member 4 is disposed transversely inside of an outer battery-side longitudinal member 5. On either side of the frame 2, and energy-absorbing element 10 is disposed transversely outside of the battery-side longitudinal members 4, 5. The inner and outer battery-side longitudinal members 4, 5 are further spaced apart than the vehicle-side longitudinal members 3, i.e., the transverse distance between the battery-side longitudinal members 4, 5 is greater than the transverse distance between the vehicle-side longitudinal members 3. The vehicle-side longitudinal members 3 comprise a plurality first mounting features 11, while the battery-side longitudinal members 4, 5 comprise a plurality of second mounting features 15. Also, the mounting adapter 1 comprises a plurality of attachment element 21 that may be made of sheet metal.

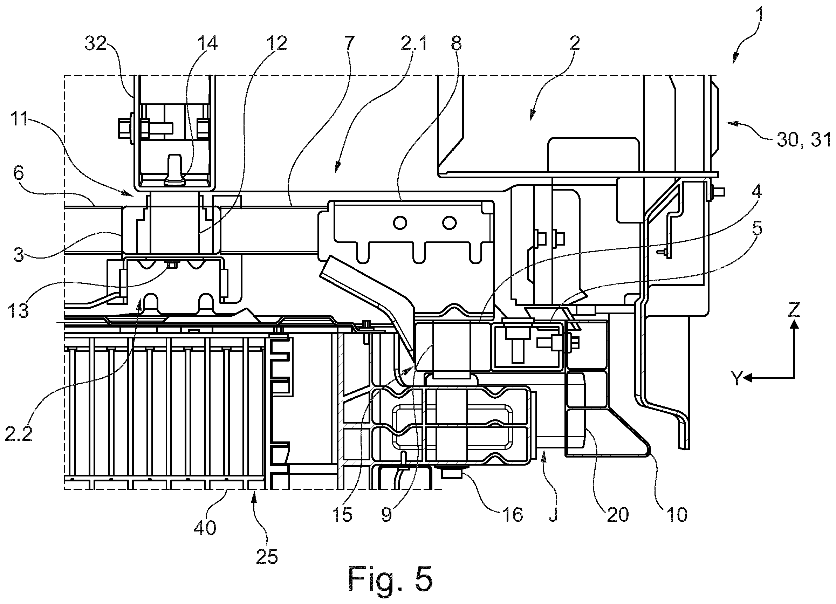

As can be seen in the sectional view of fig. 5, the energy-absorbing element 10 is an extruded closed profile exemplary made of aluminum alloy. At a rear end of each outer battery-side longitudinal member 5, a jacking element 20 is disposed which defines a jacking point J. The frame 2 has an upper side 2.1, which in assembled state faces upwards and an underside 2.2 facing downwards. On the underside 2.2, the frame 2 defines a mounting space 25 for the battery module 40. As can be seen in fig. 5, the energy-absorbing elements 10 are transversely offset from the mounting space 25.

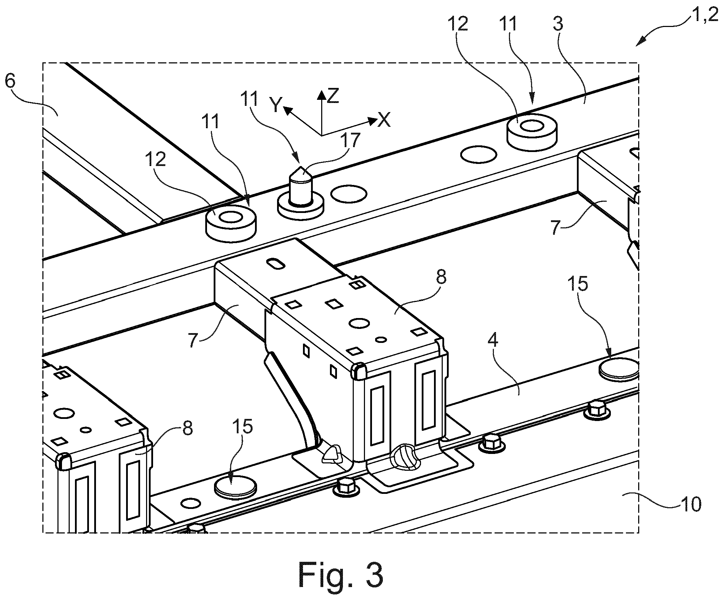

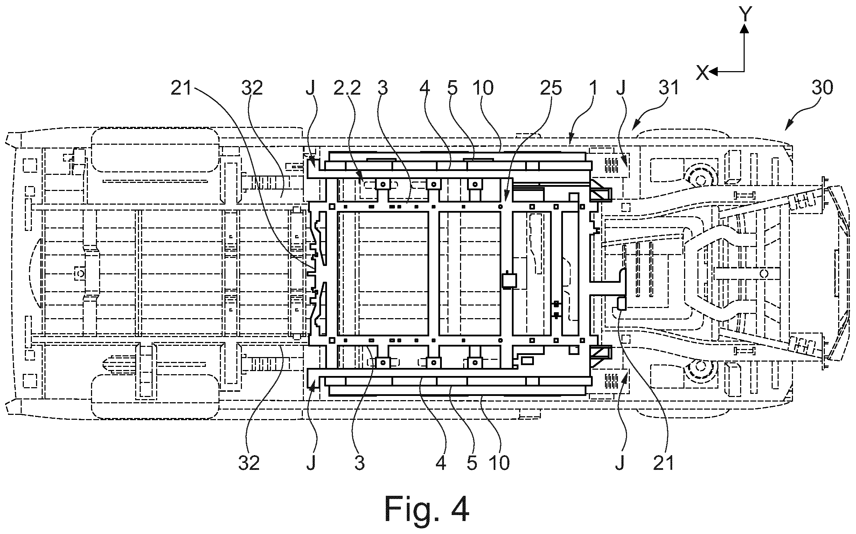

Fig. 4 shows an underside view of the vehicle 30 with the mounting adapter 1 connected to the underbody 31. Specifically, the vehicle-side longitudinal members 3 are connected to longitudinal beams 32 of the underbody 31. For this purpose, several of the first mounting features 11 comprise a first sleeve element 12, in this case a machined steel sleeve, which traverses the vehicle-side longitudinal member 3 in a vertical direction (see also figs. 3 and 5). A bolt 30 passes through the first sleeve element 12 and is secured to the longitudinal beam 32 by a nut 14. Two of the first mounting features 11 comprise a locator pin 17 that protrudes vertically from the first longitudinal member 3. The longitudinal beams 32 comprise corresponding locator holes (not shown) which facilitate proper positioning of the mounting adapter 1 during assembly. It will be appreciated that the distance between the longitudinal beams 32 is significantly smaller than the width of the mounting space 25, wherefore it would be impossible to integrate the battery module 40 into the underbody 31 without the inventive mounting adapter 1.

Fig. 5 shows a sectional view along the YZ-plane of a detail of the vehicle underbody 31 with the mounting adapter 1 and the battery module 40 connected to the mounting adapter 1. As can be seen in this sectional view, each second mounting feature 15 comprises a second sleeve element 9, which in this case is a barrel nut. A bolt 16 passes through the second sleeve element 9, with an outer threading of the bolt 16 engaging an inner thread of the second sleeve element 9

Regarding fig. 5, it should be noted that each energy-absorbing element 10 is laterally offset from the mounting space 25 and therefore from the battery module 40. Accordingly, in case of a side impact, the energy-absorbing element 10 can undergo a deformation, thus absorbing energy, before it even makes contact with the battery module 40. Therefore, a less severe side impact will not result in any damage on the battery module 40. In case of a more severe side impact, the very structure of the frame 2 helps to protect the battery module 40. The impact force will act on the outer battery-side longitudinal element 5 before the battery module 40 is affected. The outer battery-side longitudinal element 5 is connected through the bracket element 8 and the cross elements 6, 7 to the opposite side of the frame 2, wherefore forces are transferred to the opposite side and the mechanical stability of the frame to as a whole is enhanced.

When the battery module 40 is installed in the mounting space 25 various electrical and/or cooling components like cables or piping are needed for the operation of the battery module 40. Such components can be attached to one of the attachment element 21.

If the vehicle 30 needs to be lifted on a vehicle lift (not shown), its weight is supported on four jacking points J indicated in fig. 4. In this case, two of the jacking points J are disposed on the vehicle underbody 31, while the other two jacking points J are disposed on the jacking element 20 of the mounting adapter 1. During the lifting operation, a significant portion of the vehicle weight is supported by each jacking point J. However, the jacking element 20 and the frame 2 as a whole are sufficiently stable to support this weight. Accordingly, suitably positioned jacking points J are available inside of the presence of the mounting adapter 1. Accordingly, it is possible to lift the vehicle 30 without removing the mounting adapter 1.

### List of reference numerals:

- 1: mounting adapter
- 2: frame
- 2.1: upper side
- 2.2: underside
- 3: vehicle-side longitudinal member
- 4, 5: battery-side longitudinal member
- 6: first cross member
- 7: second cross member
- 8: bracket element
- 9, 12: sleeve element
- 10: energy-absorbing element
- 11, 15: mounting feature
- 13, 16: bolt
- 14: nut
- 17: locator pin
- 20: jacking element
- 21: attachment element
- 25: mounting space
- 30: vehicle
- 31: underbody
- 32: longitudinal beam
- 40: battery module
- J: jacking point
- X: X-axis
- Y: Y-axis
- Z: Z axis

## Claims

1. A mounting adapter (1) for mounting a battery module (40) to a vehicle underbody (31), the mounting adapter comprising a frame (2) with a plurality of longitudinal members (3, 4, 5) that extend along a longitudinal X-axis and a plurality of cross members (6, 7) that extend along a transverse Y-axis, wherein a plurality of first cross members (6) connect vehicle-side longitudinal members (3), said frame (2) being adapted to be mounted to the vehicle underbody (31) via the plurality of longitudinal members (3) and being adapted for mounting the battery module (40) to the frame (2) in a mounting space (25) on an underside (2.2) of said vehicle-side longitudinal members (3) and said first cross members (6), wherein said mounting adapter (1) is adapted for mounting said battery module (40) indirectly via said frame (2) to the vehicle underbody (31), and wherein the mounting adapter (1) comprises at least one energy-absorbing element (10) disposed on either side of the mounting space (25) with respect to a transverse Y-axis.

2. The mounting adapter (1) according to claim 1,
**characterized in that**
at least one energy-absorbing element (10) is made of a metal comprising aluminum.

3. The mounting adapter (1) according to any of the preceding claims,
**characterized in that**
at least one energy-absorbing element (10) comprises an extruded profile.

4. The mounting adapter (1) according to any of the preceding claims,
**characterized in that**
the frame (2) comprises a plurality of battery-side longitudinal members (4, 5) which are adapted for attaching the battery module (40) to the frame (2).

5. The mounting adapter (1) according to any of the preceding claims,
**characterized in that**
at least one energy-absorbing element (10) is disposed at an outer side of a battery-side longitudinal member (4, 5) with respect to the Y-axis.

6. The mounting adapter (1) according to any of the preceding claims,
**characterized in that**
at least some of the longitudinal members (3, 4, 5) and/or the cross members (6, 7) are made of steel.

7. The mounting adapter (1) according to any of the preceding claims,
**characterized in that**
a transverse distance of the vehicle-side longitudinal members (3) is different from a transverse distance of the battery-side longitudinal members (4, 5).

8. The mounting adapter (1) according to any of the preceding claims,
**characterized in that**
the frame (2) comprises a plurality of second cross members (7) connecting at least one vehicle-side longitudinal member (3) with at least one battery-side longitudinal member (4, 5).

9. The mounting adapter (1) according to any of the preceding claims,
**characterized in that**
it comprises a plurality of jacking points (J) adapted for supporting the vehicle (30) on a vehicle lift.

10. The mounting adapter (1) according to any of the preceding claims,
**characterized in that**
at least two jacking points (J) are disposed at an underside of the battery-side longitudinal members (4, 5).

11. The mounting adapter (1) according to any of the preceding claims,
**characterized in that**
at least one hollow sleeve element (9, 12) vertically traverses a longitudinal member (3, 4, 5), wherein in assembled state, a connecting element (13, 16) for connecting the frame (2) to the vehicle underbody (31) or the battery module (40) is passed through the sleeve element (9, 12).

12. The mounting adapter (1) according to any of the preceding claims,
**characterized by**
at least one attachment part (21) being connected to the frame (2) and being adapted for attaching an electrical component or a cooling element to the frame (2).

13. A combination of a vehicle (30), a mounting adapter (1) according to one of the preceding claims, and a battery module (40), the frame (2) is mounted to a vehicle underbody (31) of the vehicle (30), the battery module (40) being mounted to the frame (2) in the mounting space (25) on the underside (2.2) of said vehicle-side longitudinal members (3) and said first cross members (6), wherein said mounting adapter (1) mounts said battery module (40) indirectly via said frame (2) to the vehicle underbody (31).

## Patentansprüche

1. Montageadapter (1) zum Montieren eines Batteriemoduls (40) an einem Fahrzeugunterboden (31), wobei der Montageadapter einen Rahmen (2) mit mehreren Längsträgern (3, 4, 5), die sich entlang einer längs verlaufenden X-Achse erstrecken, und mehreren Querträgern (6, 7), die sich entlang einer quer verlaufenden Y-Achse erstrecken, umfasst, wobei mehrere erste Querträger (6) fahrzeugseitige Längsträger (3) verbinden, wobei der Rahmen (2) dazu angepasst ist, über die mehreren Längsträger (3) an dem Fahrzeugunterboden (31) montiert zu werden, und dazu angepasst ist, das Batteriemodul (40) an dem Rahmen (2) in einem Montageraum (25) an einer Unterseite (2.2) der fahrzeugseitigen Längsträger (3) und der ersten Querträger (6) zu montieren, wobei der Montageadapter (1) dazu angepasst ist, das Batteriemodul (40) indirekt über den Rahmen (2) an dem Fahrzeugunterboden (31) zu montieren, und wobei der Montageadapter (1) mindestens ein energieabsorbierendes Element (10) umfasst, das auf beiden Seiten des Montageraums (25) bezüglich einer quer verlaufenden Y-Achse angeordnet ist.

2. Montageadapter (1) nach Anspruch 1,
**dadurch gekennzeichnet, dass**
mindestens ein energieabsorbierendes Element (10) aus einem Metall, umfassend Aluminium, gefertigt ist.

3. Montageadapter (1) nach einem der vorhergehenden Ansprüche,
**dadurch gekennzeichnet, dass**
mindestens ein energieabsorbierendes Element (10) ein extrudiertes Profil umfasst.

4. Montageadapter (1) nach einem der vorhergehenden Ansprüche,
**dadurch gekennzeichnet, dass**
der Rahmen (2) mehrere batterieseitige Längsträger (4, 5) umfasst, die zur Befestigung des Batteriemoduls (40) am Rahmen (2) angepasst sind.

5. Montageadapter (1) nach einem der vorhergehenden Ansprüche,
**dadurch gekennzeichnet, dass**
mindestens ein energieabsorbierendes Element (10) an einer Außenseite eines batterieseitigen Längsträgers (4, 5) bezüglich der Y-Achse angeordnet ist.

6. Montageadapter (1) nach einem der vorhergehenden Ansprüche,
**dadurch gekennzeichnet, dass**
zumindest einige der Längsträger (3, 4, 5) und/oder der Querträger (6, 7) aus Stahl gefertigt sind.

7. Montageadapter (1) nach einem der vorhergehenden Ansprüche,
**dadurch gekennzeichnet, dass**
sich ein Querabstand der fahrzeugseitigen Längsträger (3) von einem Querabstand der batterieseitigen Längsträger (4, 5) unterscheidet.

8. Montageadapter (1) nach einem der vorhergehenden Ansprüche,
**dadurch gekennzeichnet, dass**
der Rahmen (2) mehrere zweite Querträger (7) umfasst, die mindestens einen fahrzeugseitigen Längsträger (3) mit mindestens einem batterieseitigen Längsträger (4, 5) verbinden.

9. Montageadapter (1) nach einem der vorhergehenden Ansprüche,
**dadurch gekennzeichnet, dass**
er mehrere Anhebepunkte (J) umfasst, die zum Abstützen des Fahrzeugs (30) auf einer Fahrzeughebebühne angepasst sind.

10. Montageadapter (1) nach einem der vorhergehenden Ansprüche,
**dadurch gekennzeichnet, dass**
mindestens zwei Anhebepunkte (J) an einer Unterseite der batterieseitigen Längsträger (4, 5) angeordnet sind.

11. Montageadapter (1) nach einem der vorhergehenden Ansprüche,
**dadurch gekennzeichnet, dass**
mindestens ein hohles Hülsenelement (9, 12) einen Längsträger (3, 4, 5) vertikal durchquert, wobei im montierten Zustand ein Verbindungselement (13, 16) zur Verbindung des Rahmens (2) mit dem Fahrzeugunterboden (31) oder dem Batteriemodul (40) durch das Hülsenelement (9, 12) hindurchgeführt ist.

12. Montageadapter (1) nach einem der vorhergehenden Ansprüche,
**dadurch gekennzeichnet, dass**
mindestens ein Befestigungsteil (21) mit dem Rahmen (2) verbunden ist und zum Befestigen einer elektrischen Komponente oder eines Kühlelements an dem Rahmen (2) angepasst ist.

13. Kombination aus einem Fahrzeug (30), einem Montageadapter (1) nach einem der vorhergehenden Ansprüche und einem Batteriemodul (40), wobei der Rahmen (2) an einem Fahrzeugunterboden (31) des Fahrzeugs (30) montiert ist, wobei das Batteriemodul (40) an dem Rahmen (2) in dem Montageraum (25) an der Unterseite (2.2) der fahrzeugseitigen Längsträger (3) und der ersten Querträger (6) montiert ist, wobei der Montageadapter (1) das Batteriemodul (40) indirekt über den Rahmen (2) am Fahrzeugunterboden (31) montiert.

## Revendications

1. Adaptateur de fixation (1) pour la fixation d'un module de batterie (40) à un soubassement de carrosserie (31) de véhicule, l'adaptateur de fixation comprenant un cadre (2) avec une pluralité d'éléments longitudinaux (3, 4, 5) qui s'étendent le long d'un axe longitudinal X et une pluralité d'éléments transversaux (6, 7) qui s'étendent le long d'un axe transversal Y, une pluralité de premiers éléments transversaux (6) reliant des éléments longitudinaux côté véhicule (3), ledit cadre (2) étant adapté pour être fixé au soubassement de carrosserie (31) de véhicule par l'intermédiaire de la pluralité d'éléments longitudinaux (3) et étant adapté pour la fixation du module de batterie (40) au cadre (2) dans un espace de fixation (25) sur une face inférieure (2.2) desdits éléments longitudinaux côté véhicule (3) et desdits premiers éléments transversaux (6), ledit adaptateur de fixation (1) étant adapté pour la fixation dudit module de batterie (40) au soubassement de carrosserie (31) du véhicule indirectement par l'intermédiaire dudit cadre (2), et l'adaptateur de fixation (1) comprenant au moins un élément d'absorption d'énergie (10) disposé de part et d'autre de l'espace de fixation (25) par rapport à un axe transversal Y.

2. Adaptateur de fixation (1) selon la revendication 1,
**caractérisé en ce que**
au moins un élément d'absorption d'énergie (10) est constitué d'un métal comprenant de l'aluminium.

3. Adaptateur de fixation (1) selon l'une quelconque des revendications précédentes,
**caractérisé en ce que**
au moins un élément d'absorption d'énergie (10) comprend un profilé extrudé.

4. Adaptateur de fixation (1) selon l'une quelconque des revendications précédentes,
**caractérisé en ce que**
le cadre (2) comprend une pluralité d'éléments longitudinaux côté batterie (4, 5) adaptés pour la fixation du module de batterie (40) au cadre (2).

5. Adaptateur de fixation (1) selon l'une quelconque des revendications précédentes,
**caractérisé en ce que**
au moins un élément d'absorption d'énergie (10) est disposé sur un côté extérieur d'un élément longitudinal côté batterie (4, 5) par rapport à l'axe Y.

6. Adaptateur de fixation (1) selon l'une quelconque des revendications précédentes,
**caractérisé en ce que**
au moins une partie des éléments longitudinaux (3, 4, 5) et/ou des éléments transversaux (6, 7) sont faits en acier.

7. Adaptateur de fixation (1) selon l'une quelconque des revendications précédentes,
**caractérisé en ce que**
une distance transversale des éléments longitudinaux côté véhicule (3) est différente d'une distance transversale des éléments longitudinaux côté batterie (4, 5).

8. Adaptateur de fixation (1) selon l'une quelconque des revendications précédentes,
**caractérisé en ce que**
le cadre (2) comprend une pluralité de seconds éléments transversaux (7) reliant au moins un élément longitudinal côté véhicule (3) à au moins un élément longitudinal côté batterie (4, 5).

9. Adaptateur de fixation (1) selon l'une quelconque des revendications précédentes,
**caractérisé en ce que**
il comprend une pluralité de points de levage (J) adaptés pour supporter le véhicule (30) sur un pont élévateur.

10. Adaptateur de fixation (1) selon l'une quelconque des revendications précédentes,
**caractérisé en ce que**
au moins deux points de levage (J) sont disposés sur une face inférieure des éléments longitudinaux côté batterie (4, 5).

11. Adaptateur de fixation (1) selon l'une quelconque des revendications précédentes,
**caractérisé en ce que**
au moins un élément formant manchon creux (9, 12) traverse verticalement un élément longitudinal (3, 4, 5), un élément de liaison (13, 16) servant à relier le cadre (2) au soubassement de carrosserie (31) de véhicule ou au module de batterie (40) passant, dans l'état assemblé, à travers l'élément formant manchon (9, 12).

12. Adaptateur de fixation (1) selon l'une quelconque des revendications précédentes,
**caractérisé par**
au moins une partie de fixation (21) reliée au cadre (2) et adaptée pour fixer un composant électrique ou un élément de refroidissement au cadre (2).

13. Combinaison d'un véhicule (30), d'un adaptateur de fixation (1) selon l'une des revendications précédentes, et d'un module de batterie (40), le cadre (2) étant fixé à un soubassement de carrosserie (31) de véhicule du véhicule (30), le module de batterie (40) étant fixé au cadre (2) dans l'espace de fixation (25) sur la face inférieure (2.2) desdits éléments longitudinaux côté véhicule (3) et desdits premiers éléments transversaux (6), ledit adaptateur de fixation (1) fixant ledit module de batterie (40) au soubassement de carrosserie (31) de véhicule indirectement par l'intermédiaire dudit cadre (2) .
